# EUROPEAN PATENT APPLICATION

(11) **EP 2 677 373 A2**
(43) Date of publication of application: **25.12.2013**
(21) Application number: 13172408.0
(22) Date of filing: 18.06.2013
(51) Int. Cl.: G05B 13/02

(54) **Concentrated solar power system**

(30) Priority: 20.06.2012 US 201213527754
(71) Applicant: General Electric Company, Schenectady, New York 12345 (US)
(72) Inventor: Hannula, Scott Victor, Lynn, MA 01910 (US); Watts, Duncan George, Schenectady, NY 12345 (US)
(74) Representative: Cleary, Fidelma

(57) **Abstract**

Various embodiments of the invention include control systems for concentrated solar power systems (CSPS) (14). In some embodiments, a system is disclosed including: at least one computing device configured to perform the following: identify a solar-obstructing object (SOO) (6) within a field of detection; determine a likelihood of the SOO (6) obstructing a predetermined portion of sunlight from a solar receptor (16); and provide instructions for modifying operation of a concentrated solar power system (CSPS) (14) in response to determining the likelihood of the SOO (6) obstructing the predetermined portion of sunlight from the solar receptor (16) deviates from a predetermined threshold range.

## Description

### FIELD OF THE INVENTION

The subject matter disclosed herein relates to control systems. More particularly, aspects of the disclosure relate to control systems for concentrated solar power systems.

### BACKGROUND OF THE INVENTION

Concentrated solar power (CSP) systems such as concentrated solar power steam turbine (CSPST) or concentrated solar power evaporators (CSPE) rely on sunlight as a power source. In the CSPST example, the sunlight is a means for heating water to produce steam. This steam then drives the turbine, which, coupled to a dynamoelectric machine such as an electric generator, produces electricity. However, unpredictable weather, including cloud cover, can make it difficult to predict how much steam will be available for the turbine at a given time (in the example of a CSPST). The unpredictable nature of the weather, in this sense, can make it difficult to efficiently operate a concentrated solar power system such as a CSPST (or a CSPE or other CSP system).

### BRIEF DESCRIPTION OF THE INVENTION

Various embodiments of the invention include control systems for concentrated solar power systems. In some embodiments, a system is disclosed, the system including: at least one computing device configured to perform the following: identify a solar-obstructing object (SOO) within a field of detection; determine a likelihood of the SOO obstructing a predetermined portion of sunlight from a solar receptor; and provide instructions for modifying operation of a concentrated solar power system (CSPS) in response to determining the likelihood of the SOO obstructing the predetermined portion of sunlight from the solar receptor deviates from a predetermined threshold range.

A first aspect of the invention includes a system having at least one computing device configured to perform the following: identify a solar-obstructing object (SOO) within a field of detection; determine a likelihood of the SOO obstructing a predetermined portion of sunlight from a solar receptor; and provide instructions for modifying operation of a concentrated solar power system (CSPS) in response to determining the likelihood of the SOO obstructing the predetermined portion of sunlight from the solar receptor deviates from a predetermined threshold range.

A second aspect of the invention includes a system having: a vision system for monitoring a field of detection; and at least one computing device operably connected with the vision system, the at least one computing device configured to perform the following: identify a solar-obstructing object (SOO) within the field of detection using the vision system; determine a likelihood of the SOO obstructing a predetermined portion of sunlight from a solar receptor; and modify operation of a concentrated solar power system (CSPS) in response to determining the likelihood of the SOO obstructing the predetermined portion of sunlight from the solar receptor deviates from a predetermined threshold range.

A third aspect of the invention includes a system having: a concentrated solar power steam turbine (CSPST); and a control system operably connected with the CSPST, the control system including at least one computing device configured to perform the following: identify a solar-obstructing object (SOO) within a field of detection; determine a likelihood of the SOO obstructing a predetermined portion of sunlight from a solar receptor; and provide instructions for modifying operation the CSPST in response to determining the likelihood of the SOO obstructing the predetermined portion of sunlight from the solar receptor deviates from a predetermined threshold range.

### BRIEF DESCRIPTION OF THE DRAWINGS

These and other features of this invention will be more readily understood from the following detailed description of the various aspects of the invention taken in conjunction with the accompanying drawings that depict various embodiments of the invention, in which:
FIG. 1 shows a schematic depiction of an environment, including systems according to various embodiments of the invention.
FIG. 2 shows a flow chart illustrating processes according to various embodiments of the invention.
FIG. 3 shows an illustrative environment including a concentrated solar power steam turbine (CSPST) control system according to various embodiments of the invention.

It is noted that the drawings of the invention are not necessarily to scale. The drawings are intended to depict only typical aspects of the invention, and therefore should not be considered as limiting the scope of the invention. In the drawings, like numbering represents like elements between the drawings.

### DETAILED DESCRIPTION OF THE INVENTION

As noted herein, the subject matter disclosed herein relates to control systems. More particularly, aspects of the disclosure relate to control systems for concentrated solar power systems.

Steam turbines, and other forms of turbo machinery in general (e.g., evaporators), function better over the long term when operating at their design conditions. When operation at design conditions is not possible, operation at another steady state condition can be desirable. Transient events can be undesirable because the cyclical nature of such events can reduce part life, increase the likelihood of performance degradation through increased clearances due to rubs, etc.

Concentrated Solar Power (CSP) systems (e.g., CSP steam turbines or CSP evaporators) present a unique challenge in that their motive force is susceptible to wide variation. External, uncontrollable factors such as cloud cover can change the steam conditions (or evaporator conditions). Systems, computer program products, and associated methods according to various embodiments of the invention anticipate, rather than react, to these factors. These systems can determine a likelihood (and severity) of an interruption in sunlight, and can modify operation of the steam turbine (and the power plant as a whole) or the evaporator to a preferred state based upon the determined likelihood (and severity) of that interruption.

Various embodiments of the invention include systems (e.g., computer systems) which can: identify a solar-obstructing object (SOO) within a field of detection; determine a likelihood of the SOO obstructing a predetermined portion of sunlight from a solar receptor; and modify operation of a concentrated solar power system (e.g., a steam turbine (ST) evaporator or other CSP system)) in response to determining the likelihood of the SOO obstructing the predetermined portion of sunlight from the solar receptor deviates from a predetermined threshold range.

More particularly, various embodiments of the invention include a system having: at least one computing device (e.g., a control system and/or computer system) configured to perform the following: identify a solar-obstructing object (SOO) such as a cloud, a smog-based object (e.g., a smog cloud), an aircraft, etc. within a field of detection. The field of detection can include the airspace proximate (e.g., within several miles) of the solar receptor. The extent of the field of detection can be dictated by the device which detects the SOO. That is, the at least one computing device can be operably connected with at least one of a visual detection system, a radar detection system, an ultrasound detection system or a laser detection system. In some cases, where the at least one computing device is coupled to a visual detection system, the vision system can visually monitor the field of detection.

As described herein, the at least one computing device can determine a likelihood that the SOO will obstruct a predetermined portion of sunlight from a solar receptor. The solar receptor can be part of a concentrated solar power steam turbine (CSPST). That is, the solar receptor can intercept solar rays and use the energy from those rays to heat a liquid (e.g., water) for producing steam. In some cases, the solar receptor includes a mirror, a photovoltaic panel, a prism, a semi-transparent surface, etc. The at least one computing device can monitor the movement of the SOO (or group of SOOs), and determine a likelihood that the SOO will obstruct a predetermined portion of sunlight from the solar receptor. If the at least one computing device determines that the SOO will obstruct the predetermined portion of sunlight (which can factor in both an amount of sunlight obstructed as well as a time of obstruction), the at least one computing device can provide instructions for modifying operation of the CSPS.

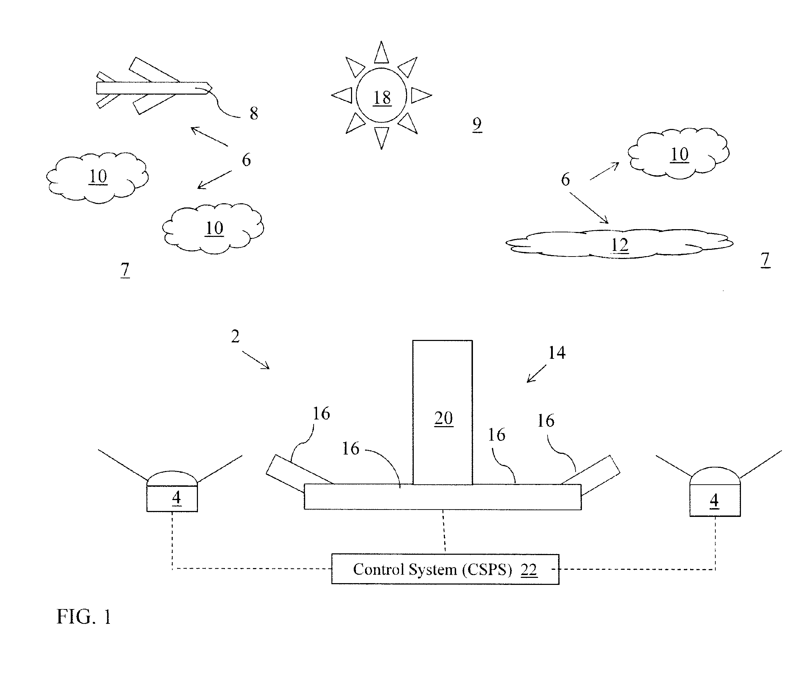

Turning to FIG. 1, an illustrative environment is shown including systems according to various embodiments of the invention. As shown, the system 2 can include a detection system 4 (two shown) for monitoring a field of detection 7. In some cases, the detection system(s) 4 can include a vision system for monitoring a field of vision. In these cases, the vision system can include a conventional camera-based vision system capable of capturing images of objects moving within the field of detection 7. In some cases, the detection system 4 is configured to detect (and capture images of) solar obstructing objects (SOOs) 6 in the air space 9, where those SOOs 6 can include aircraft 8, clouds 10 and/or smog-based objects 12.

In various other embodiments, the detection system 4 can include at least one of: a visual detection system, a radar detection system, an ultrasound detection system or a laser detection system. The detection system 4 can further include conventional weather-monitoring equipment, including a device for monitoring wind speed, pressure, etc.

The system 2 can further include a concentrated solar power system (CSPS) 14, such as a CSP steam turbine (CSPST) or CSP evaporator (CSPE) which can include a plurality of solar receptors 16. The solar receptors 16 can include, for example, reflecting and or absorbing solar surfaces such as mirrors, prisms, photovoltaic panels or semi-transparent surfaces) for either absorbing or redirecting solar energy from a solar energy source 18 (the sun) to generate steam for powering the turbine section 20 of the CSPST 14. In the case that the CSPS 14 includes a CSPST, it is understood that the CSPST can take the form of any conventional concentrated solar power steam turbine, in that it may include one or more parabolic troughs, focused boilers, or other components found in such CSPST systems. The depiction of the CSPS 14 herein is merely illustrative of one form of concentrated solar power steam turbine capable of interacting with the control systems and/or computer systems described according to the various embodiments of the invention.

The system 2 can further include a control system (or CSPS control system) 22, which can include at least one computing device operably connected (e.g., via wireless and/or hard-wired means) with the detection system 4 and the CSPS 14. The control system 22 can be configured (e.g., programmed) to identify a solar-obstructing object (SOO) 6 within the field of detection 7 using the detection system 4 (e.g., a vision system). The control system 22 can analyze SOO data about the SOO 6, including a size of the SOO 6, a shape of the SOO 6, a speed of the SOO 6 (e.g., by comparing multiple SOO data points about the SOO 6) and/or a clustering of the SOO 6 (e.g., whether a group of SOOs 6 are clustered in such a way as to provide a substantially continuous obstruction of sunlight). The control system 22 can also analyze whether the SOO 6 matches characteristics of predetermined SOOs 6 (such as having particular contours, sizes, opaqueness, etc.).

Based upon historical SOO data, the control system 22 can further determine a likelihood of the SOO 6 obstructing a predetermined portion of sunlight from the solar receptor 16 (or a portion of the receptor(s) 16). The control system 22 can gather this historical SOO data over any period, and in some cases, the control system 22 (coupled with the detection system 4 can monitor the field of detection 7 over the period, and identify a set of SOOs 6 which intersect the field of detection 7 during that period. The control system 22 can further log data about the intersection of the SOOs 6 with the field of detection 7 as historical SOO data. It is understood that the control system 22 can also track the SOOs 6 intersecting the field of detection 7 during that period to monitor whether one or more of those SOOs 6 obstruct a predetermined portion of sunlight from the solar receptors 16. That is, the control system 22 (coupled with the detection system 4 can monitor each SOO 6 (or a group of SOOs 6) to determine whether the SOO 6 obstructs a significant portion of sunlight from the solar receptor 16.

The control system 22 can develop an algorithm (e.g., a solar obstruction object, SOO algorithm) for predicting whether an SOO 6 entering the field of detection 7 will cause a significant interruption in solar energy reaching the solar receptor 16. This solar obstruction object (SOO) algorithm can account for one or more of a size, speed, shape, type, and clustering of the SOO 6. The SOO algorithm can further account for an entry angle and/or flight path of the SOO 6. Results of the SOO algorithm calculation for each SOO 6 can be compared with a predetermined threshold range, e.g., a range of percentages of sunlight which can be acceptably obstructed from the solar receptor 16 for a period. In some cases, the SOO 6 may be too small, moving too quickly, or be too transparent to cause a significant interruption in sunlight reaching the solar receptor 16. In other cases, the SOO 6 (and associated characteristics) indicates a likelihood (e.g., greater than X% chance) of significantly obstructing sunlight from reaching the solar receptor 16. The "significance" of this obstruction can be based upon an amount of sunlight obstructed (e.g., a number or percentage of receptor(s) 16 obstructed), a time of obstruction (e.g., 2, 3, 7, etc. minutes), a combination of these factors, or other factors.

Returning to FIG. 1, the control system 22 can modify operation of the CSPS 14 in response to determining the likelihood of the SOO 6 obstructing the predetermined portion of sunlight from the solar receptor 16 deviates from a predetermined threshold range. In some cases, where the control system 22 (coupled with the detection system 4) determines that the likelihood of the SOO 6 obstructing sunlight from the solar receptor 16 exceeds a threshold range (e.g., an X% chance of interruption of Y% of the solar receptor(s) 16 for Z time), the control system 22 can provide instructions to the CSPS 14 (or directly control the CSPS 14) to reduce an operating setting (e.g., an operating speed in the case of a CSPST) of the CSPS, e.g., to prepare for the predicted reduction in available steam. In other cases, where the control system 22 determines that the likelihood of the SOO 6 obstructing the predetermined portion of sunlight from the solar receptor 16 does not exceed a threshold range (e.g., an A% chance of interruption of B% of the solar receptor(s) 16 for C time), the control system 22 can divert some of its energy production (e.g., electricity) to a storage device, either locally or remotely. In this case, the control system 22 can anticipate a surplus of sunlight (and consequently, solar energy), and can plan to store that energy for later use by one or more entities.

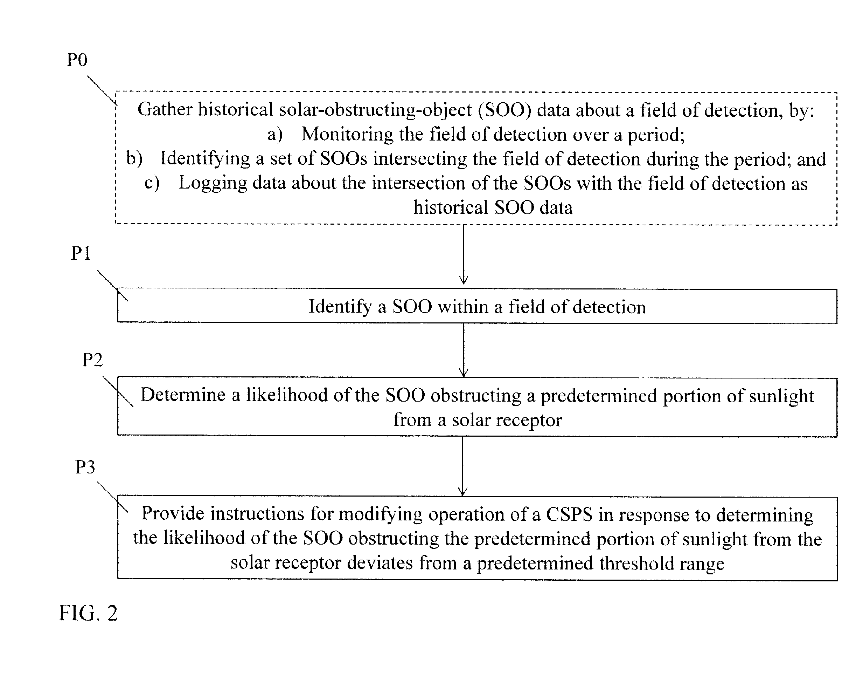

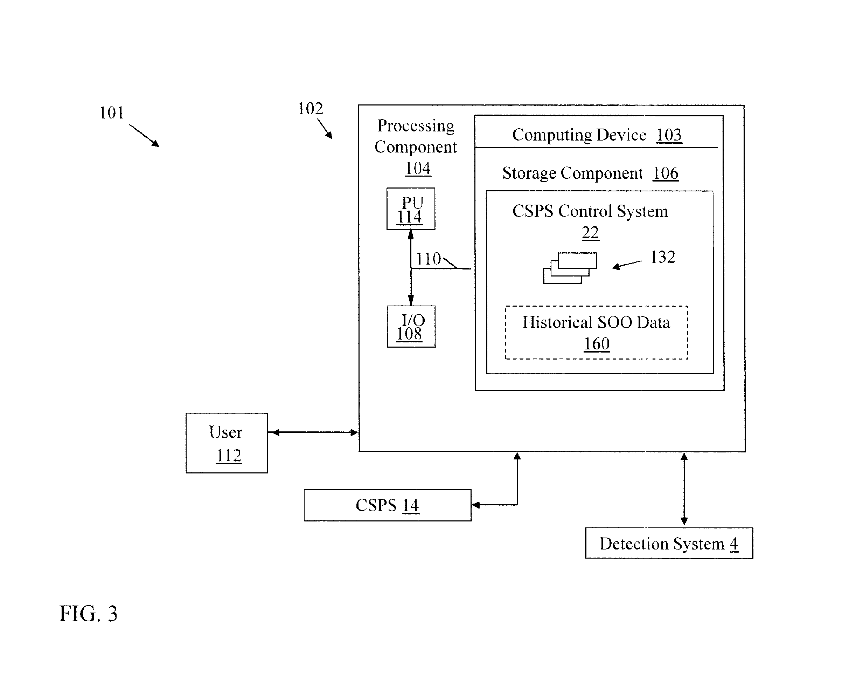

Turning to FIG. 2, a flow diagram is shown illustrating a method according to various embodiments of the invention. The method can include various processes, which can be performed in the order shown, or in any other order. Some of these processes are referenced in view of the environment of FIG. 1. In FIG. 2, an optional preliminary process P0 is shown with a dashed-line indicator, illustrating that this process can be performed according to some embodiments of the invention. According to various embodiments of the invention, a process can include:
Preliminary process P0: Gather historical solar-obstructing object (SOO) data about a field of detection. This process can include sub-processes: A) Monitoring the field of detection 7 over a period; B) Identifying a set of SOOs 6 (e.g., one or more) intersecting the field of detection 7 during the period; and C) Logging data about the intersection of the SOOs 6 with the field of detection 7 as historical SOO data (e.g., historical SOO data 160 in FIG. 3).
Process P1: In some cases, following process P0, process P1 can include identifying an SOO 6 within a field of detection 7. In some cases, as noted herein the SOO 6 can be identified by a detection system 4, which can identify the SOO 6 as it enters the field of detection 7.
Process P2: After identifying the SOO 6 within the field of detection 7, process P2 can include determining a likelihood that the SOO 6 will obstruct a predetermined portion of sunlight from the solar receptor(s) 16. As noted herein, this can include using an SOO algorithm to calculate a probability that the SOO 6 will obstruct a significant portion of the solar receptor(s) 16 for a significant period. In various embodiments, the SOO algorithm is constructed using historical data on SOO movement and growth over a learning period. Based upon the historical data about the movement and growth of SOO(s) 6, the SOO algorithm can determine a likelihood that an SOO 6 entering the field of detection 7 will obstruct a predetermined portion of sunlight from the solar receptor(s) 16. In various other embodiments, the SOO algorithm can take real-time data about an SOO 6 entering the field of detection 7, e.g., in several intervals, and determine a likelihood that the SOO 6 will obstruct the predetermined portion of sunlight from the solar receptor(s) 16 based upon SOO speed and growth during the several intervals.
Process P3: After determining a likelihood that the SOO 6 will obstruct a predetermined portion of sunlight from the solar receptor(s) 16, process P3 can include providing instructions for modifying operation of the CSPS 14 in response to determining that the likelihood of the SOO 6 obstructing the predetermined portion of sunlight from the solar receptor(s) 16 deviates from a predetermined threshold range. That is, in some cases, the likelihood (or, probability) of the SOO 6 obstructing the predetermined portion of sunlight exceeds the threshold range. In these cases, the control system 22 can instruct the CSPS 14 to reduce an operating parameter e.g., operating speed, output, steam flow, etc. in anticipation of a reduction in available steam.

In other cases, the likelihood of the SOO 6 obstructing the predetermined portion of sunlight is below the threshold range. In these cases, the control system 22 can instruct the CSPS 14 to maintain (or increase) an operating parameter and/or divert energy (e.g., electricity) produced to a storage device or another machine configured to utilize the excess energy.

Turning to FIG. 3 depicts an illustrative environment 101 for performing the control system processes described herein with respect to various embodiments. To this extent, the environment 101 includes a computer system 102 that can perform one or more processes described herein in order to control operation of a concentrated solar power system (CSPS) such as a CSP ST or a CSP evaporator, e.g., CSPS 14. In particular, the computer system 102 is shown as including a CSPS control system 22, which makes computer system 102 operable to control a CSPS by performing any/all of the processes described herein and implementing any/all of the embodiments described herein.

The computer system 102 is shown including a computing device 103, which can include a processing component 104 (e.g., one or more processors), a storage component 106 (e.g., a storage hierarchy), an in-put/output (I/O) component 108 (e.g., one or more I/O interfaces and/or devices), and a communications pathway 110. In general, the processing component 104 executes program code, such as the CSPS control system 22, which is at least partially fixed in the storage component 106. While executing program code, the processing component 104 can process data, which can result in reading and/or writing transformed data from/to the storage component 106 and/or the I/O component 108 for further processing. The pathway 110 provides a communications link between each of the components in the computer system 102. The I/O component 108 can comprise one or more human I/O de-vices, which enable a human user 112 to interact with the computer system 102 and/or one or more communications devices to enable a system user 112 to communicate with the computer system 102 using any type of communications link. To this extent, the CSPS control system 22 can manage a set of interfaces (e.g., graphical user interface(s), application program interface, etc.) that enable human and/or system users 112 to interact with the CSPS control system 22. Further, the CSPS control system 22 can manage (e.g., store, retrieve, create, manipulate, organize, present, etc.) data, such as historical SOO data 160 using any solution. The CSPS control system 22 can additionally communicate with the CSPS 14, e.g., via wireless and/or hardwired means.

In any event, the computer system 102 can comprise one or more general purpose computing articles of manufacture (e.g., computing devices) capable of executing program code, such as the CSPS control system 22, installed thereon. As used herein, it is understood that "program code" means any collection of instructions, in any language, code or notation, that cause a computing device having an information processing capability to perform a particular function either directly or after any combination of the following: (a) conversion to another language, code or notation; (b) reproduction in a different material form; and/or (c) decompression. To this extent, the CSPS control system 22 can be embodied as any combination of system software and/or application software. It is further understood that the CSPS control system 22 can be implemented in a cloud-based computing environment, where one or more processes are performed at distinct computing devices (e.g., a plurality of computing devices 103), where one or more of those distinct computing devices may contain only some of the components shown and described with respect to the computing device 103 of FIG. 3.

Further, the CSPS control system 22 can be implemented using a set of modules 132. In this case, a module 132 can enable the computer system 102 to perform a set of tasks used by the CSPS control system 22, and can be separately developed and/or implemented apart from other portions of the CSPS control system 22. As used herein, the term "component" means any configuration of hardware, with or without software, which implements the functionality described in conjunction therewith using any solution, while the term "module" means program code that enables the computer system 102 to implement the functionality described in conjunction therewith using any solution. When fixed in a storage component 106 of a computer system 102 that includes a processing component 104, a module is a substantial portion of a component that implements the functionality. Regardless, it is understood that two or more components, modules, and/or systems may share some/all of their respective hardware and/or software. Further, it is understood that some of the functionality discussed herein may not be implemented or additional functionality may be included as part of the computer system 102.

When the computer system 102 comprises multiple computing devices, each computing device may have only a portion of CSPS control system 22 fixed thereon (e.g., one or more modules 132). However, it is understood that the computer system 102 and CSPS control system 22 are only representative of various possible equivalent computer systems that may perform a process described herein. To this extent, in other embodiments, the functionality provided by the computer system 102 and CSPS control system 22 can be at least partially implemented by one or more computing devices that include any combination of general and/or specific purpose hardware with or without program code. In each embodiment, the hardware and program code, if included, can be created using standard engineering and programming techniques, respectively.

Regardless, when the computer system 102 includes multiple computing devices, the computing devices can communicate over any type of communications link. Further, while performing a process described herein, the computer system 102 can communicate with one or more other computer systems using any type of communications link. In either case, the communications link can comprise any combination of various types of wired and/or wireless links; comprise any combination of one or more types of networks; and/or utilize any combination of various types of transmission techniques and protocols.

The computer system 102 can obtain or provide data, such as historical SOO data 160 using any solution. The computer system 102 can generate historical SOO data 160, from one or more data stores, receive historical SOO data 160, from another system such as the CSPS 14 and/or the detection system 4, send historical SOO data 160 to another system, etc.

While shown and described herein as a method and system for controlling a CSPS, e.g., based upon anticipated obstruction of sunlight, it is understood that aspects of the invention further provide various alternative embodiments. For example, in one embodiment, the invention provides a computer program fixed in at least one computer-readable medium, which when executed, enables a computer system to control a CSPS (e.g., a CSP steam turbine). To this extent, the computer-readable medium includes program code, such as the CSPS control system 22 (FIG. 3), which implements some or all of the processes and/or embodiments described herein. It is understood that the term "computer-readable medium" comprises one or more of any type of tangible medium of expression, now known or later developed, from which a copy of the program code can be perceived, reproduced, or otherwise communicated by a computing device. For example, the computer-readable medium can comprise: one or more portable storage articles of manufacture; one or more memory/storage components of a computing device; paper; etc.

In another embodiment, the invention provides a method of providing a copy of program code, such as the CSPS control system 22 (FIG. 3), which implements some or all of a process described herein. In this case, a computer system can process a copy of program code that implements some or all of a process described herein to generate and transmit, for reception at a second, distinct location, a set of data signals that has one or more of its characteristics set and/or changed in such a manner as to encode a copy of the program code in the set of data signals. Similarly, an embodiment of the invention provides a method of acquiring a copy of program code that implements some or all of a process described herein, which includes a computer system receiving the set of data signals described herein, and translating the set of data signals into a copy of the computer program fixed in at least one computer-readable medium. In either case, the set of data signals can be transmitted/received using any type of communications link.

In still another embodiment, the invention provides a method of generating a system for controlling a CSPS (e.g., in response to an anticipated amount of solar obstruction). In this case, a computer system, such as the computer system 102 (FIG. 3), can be obtained (e.g., created, maintained, made available, etc.) and one or more components for performing a process described herein can be obtained (e.g., created, purchased, used, modified, etc.) and deployed to the computer system. To this extent, the deployment can comprise one or more of: (1) installing program code on a computing device; (2) adding one or more computing and/or I/O devices to the computer system; (3) incorporating and/or modifying the computer system to enable it to perform a process described herein; etc.

In any case, the technical effect of the invention, including, e.g., the CSPS control system 22, is to control operation of a concentrated solar power system in one of the various manners described and illustrated herein.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. It is further understood that the terms "front" and "back" are not intended to be limiting and are intended to be interchangeable where appropriate.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system comprising:
   at least one computing device configured to perform the following:
      identify a solar-obstructing object (SOO) within a field of detection;
      determine a likelihood of the SOO obstructing a predetermined portion of sunlight from a solar receptor; and
      provide instructions for modifying operation of a concentrated solar power system (CSPS) in response to determining the likelihood of the SOO obstructing the predetermined portion of sunlight from the solar receptor deviates from a predetermined threshold range.
2. The system of clause 1, wherein the field of detection includes a field of vision.
3. The system of clause 1 or 2, wherein the CSPS includes a concentrated solar power steam turbine (CSPST), and wherein the instructions for modifying the operation of the CSPS include instructions for reducing an operating speed of the CSPST in response to determining the likelihood of the SOO obstructing the predetermined portion of sunlight from the solar receptor deviates from the predetermined threshold range.
4. The system of any preceding clause, wherein the identifying is performed using at least one of a visual detection system, a radar detection system, an ultrasound detection system or a laser detection system.
5. The system of any preceding clause, wherein the predetermined threshold range is based upon historical SOO data.
6. The system of any preceding clause, wherein the at least one computing device is further configured to gather the historical SOO data by:
   monitoring the field of detection over a period;
   identifying a set of solar-obstructing objects (SOOs) intersecting the field of detection during the period; and
   logging data about the intersection of the SOOs with the field of detection as historical SOO data.
7. The system of any preceding clause, wherein the historical SOO data includes data about at least one of: a size of the set of SOOs, a flight pattern of the set SOOs, a speed of the set of SOOs, a transparency of the set of SOOs or a clustering of the set of SOOs.
8. A system comprising:
   a vision system for monitoring a field of detection; and
   at least one computing device operably connected with the vision system, the at least one computing device configured to perform the following:
      identify a solar-obstructing object (SOO) within the field of detection using the vision system;
      determine a likelihood of the SOO obstructing a predetermined portion of sunlight from a solar receptor; and
      modify operation of a concentrated solar power system (CSPS) in response to determining the likelihood of the SOO obstructing the predetermined portion of sunlight from the solar receptor deviates from a predetermined threshold range.
9. The system of any preceding clause, wherein the CSPS includes a concentrated solar power steam turbine (CSPST), and wherein the instructions for modifying the operation of the CSPS include instructions for reducing an operating speed of the CSPST in response to determining the likelihood of the SOO obstructing the predetermined portion of sunlight from the solar receptor deviates from the predetermined threshold range.
10. The system of any preceding clause, wherein the predetermined threshold range is based upon historical SOO data.
11. The system of any preceding clause, wherein the at least one computing device is further configured to gather the historical SOO data by:
   monitoring the field of detection over a period;
   identifying a set of solar-obstructing objects (SOOs) intersecting the field of detection during the period; and
   logging data about the intersection of the SOOs with the field of detection as historical SOO data.
12. The system of any preceding clause, wherein the historical SOO data includes data about at least one of: a size of the set of SOOs, a flight pattern of the set SOOs, a speed of the set of SOOs, a transparency of the set of SOOs or a clustering of the set of SOOs.
13. A system comprising:
   a concentrated solar power steam turbine (CSPST); and
   a control system operably connected with the CSPST, the control system including at least one computing device configured to perform the following:
      identify a solar-obstructing object (SOO) within a field of detection;
      determine a likelihood of the SOO obstructing a predetermined portion of sunlight from a solar receptor; and
      provide instructions for modifying operation the CSPST in response to determining the likelihood of the SOO obstructing the predetermined portion of sunlight from the solar receptor deviates from a predetermined threshold range.
14. The system of any preceding clause, further comprising a vision system operably connected with the control system, the vision system for visually monitoring the field of detection.
15. The system of any preceding clause, wherein the instructions for modifying the operation of the CSPST include instructions for reducing an operating speed of the CSPST in response to determining the likelihood of the SOO obstructing the predetermined portion of sunlight from the solar receptor deviates from the predetermined threshold range.
16. The system of any preceding clause, wherein the identifying is performed using at least one of a visual detection system, a radar detection system, an ultrasound detection system or a laser detection system.
17. The system of any preceding clause, wherein the determining of the likelihood of the SOO obstructing the predetermined portion of sunlight from the solar receptor includes determining at least one of: a size of the SOO, a speed of the SOO or a clustering of the SOO.
18. The system of any preceding clause, wherein the predetermined threshold range is based upon historical SOO data.
19. The system of any preceding clause, wherein the at least one computing device is further configured to gather the historical SOO data by:
   monitoring the field of detection over a period;
   identifying a set of solar-obstructing objects (SOOs) intersecting the field of detection during the period; and
   logging data about the intersection of the SOOs with the field of detection as historical SOO data.
20. The system of any preceding clause, wherein the historical SOO data includes data about at least one of: a size of the set of SOOs, a flight pattern of the set SOOs, a speed of the set of SOOs, a transparency of the set of SOOs or a clustering of the set of SOOs.

## Claims

1. A computer implemented method comprising the steps of:
identifing a solar-obstructing object (SOO) (6) within a field of detection (7);
determining a likelihood of the SOO (6) obstructing a predetermined portion of sunlight from a solar receptor (16); and
providing instructions for modifying operation of a concentrated solar power system (CSPS) (14) in response to determining the likelihood of the SOO (6) obstructing the predetermined portion of sunlight from the solar receptor (16) deviates from a predetermined threshold range.

2. The method of claim 1, wherein the field of detection (7) includes a field of vision.

3. The method of claim 1 or 2, wherein the CSPS (14) includes a concentrated solar power steam turbine (CSPST), and wherein the step of providing instructions for modifying the operation of the CSPS (14) includes providing instructions for reducing an operating speed of the CSPST in response to determining the likelihood of the SOO (6) obstructing the predetermined portion of sunlight from the solar receptor (16) deviates from the predetermined threshold range.

4. The method of any of claims 1 to 3, wherein the step of identifying is performed using at least one of a visual detection system (4), a radar detection system (4), an ultrasound detection system (4) or a laser detection system (4).

5. The method of any of claims 1 to 4, further comprising gathering historical SOO data (160) by:
monitoring the field of detection (7) over a period;
identifying a set of solar-obstructing objects (SOOs) (6) intersecting the field of detection (7) during the period; and
logging data about the intersection of the SOOs (6) with the field of detection (7) as historical SOO data (160).

6. The method of claim 5, wherein the predetermined threshold range is based upon historical SOO data (160).

7. The method of claims 5 or 6, wherein the historical SOO data (160) includes data about at least one of: a size of the set of SOOs (6), a flight pattern of the set SOOs (6), a speed of the set of SOOs (6), a transparency of the set of SOOs (6) or a clustering of the set of SOOs (6).

8. A computer program comprising computer program code means adapted to perform the steps of the method of claims 1 to 7, when executed by a computer.

9. The computer program of claim 8, embodied on a computer-readable medium.

10. A system (2) comprising:
a vision system (4) for monitoring a field of detection (7); and
at least one computing device (103) operably connected with the vision system (4), the at least one computing device (103) configured to execute the computer program of claims 8 or 9.

11. The system (2) of claim 10, further comprising:
a concentrated solar power steam turbine (CSPST) (14); and
a control system (22) operably connected with the CSPST (14), the control system including the at least one computing device (103).
